# FASCICULE DE BREVET EUROPEEN

(11) **EP 1 842 959 B1**
(45) Date de publication et mention de la délivrance du brevet: **16.09.2009**
(21) Numéro de dépôt: 07360009.0
(22) Date de dépôt: 09.03.2007
(51) Int. Cl.: D06N 5/00, E04D 5/02, E05D 5/10, B32B 11/02

(54) **MEMBRANE D'ÉTANCHÉITÉ BITUMINEUSE RÉSISTANTE AUX U.V., SYSTÈME INTÉGRANT UNE TELLE MEMBRANE ET PROCÉDÉ DE FABRICATION**
UV-BESTÄNDIGE DICHTUNGSMEMBRAN AUS BITUMEN, EINE SOLCHE MEMBRAN INTEGRIERENDES SYSTEM UND HERSTELLUNGSVERFAHREN
UV-RESISTANT BITUMINOUS WATERTIGHT MEMBRANE, SYSTEM INCLUDING SUCH A MEMBRANE AND MANUFACTURING METHOD

(30) Priorité: 16.03.2006 FR 0650907
(43) Date de publication de la demande: 10.10.2007
(73) Titulaire: SOPREMA (Société par Actions Simplifiée Unipersonnelle), 67100 Strasbourg (FR)
(72) Inventeur: Bindschedler, Pierre Etienne, 67210 Obernai (FR); Robach, Christine, 67270 Durningen (FR); Perrin, Rémi, 67870 Bischoffsheim (FR)
(74) Mandataire: Nuss, Pierre

(56) Documents cités:
- DE-A1- 19 822 876
- DE-A1- 19 942 878
- DE-U1- 8 705 654
- US-A1- 2005 144 868

## Description

La présente invention concerne le domaine des produits d'étanchéité et d'isolation, plus particulièrement les produits sous forme de membranes ou de feuilles bitumineuses souples et flexibles, avec une armature fibreuse ou filamenteuse et destinées à être exposées aux agressions du milieu extérieur, de types climatique, atmosphérique et solaire (humidité, variation de température, U.V., ...).

Depuis le début de leur mise en oeuvre, c'est-à-dire depuis la fin du 19è siècle environ, les produits du type précité ont subi différentes modifications et évolution, notamment au niveau de la masse liante bitumineuse imprégnant et enrobant l'âme.

Ainsi, cette masse liante consistait tout d'abord en du bitume oxydé. Puis, à partir des années 1960-1970, la masse liante était constituée d'un mélange [bitume + polypropylène atactique (APP)] et depuis 1975 environ les masses liantes à base de mélanges [bitume + polymère SBS (styrène-butadiène-styrène)] se répandent.

Toutefois, les polypropylènes atactiques sont peu compatibles avec les bitumes, ne sont pas toujours aisément disponibles en quantités importantes, présentent un comportement à chaud particulier (avec un point de fusion élevé) associé à une chute brutale de la viscosité. La tenue des joints de ce type de membrane est encore à ce jour un problème technique qui n'est pas complètement résolu.

Les polymères élastomères SBS quant à eux présentent de nombreuses propriétés avantageuses, à savoir : une élasticité élevée, une grande durabilité, une bonne ouvrabilité et une disponibilité élevée en termes de ressources.

Néanmoins, ces substances présentent un inconvénient majeur dans le contexte des applications des produits précités : elles sont sensibles aux U.V. (ultraviolets). En effet, le butadiène présente des liaisons doubles insaturées carbone/carbone qui sont susceptibles aux U.V.

De ce fait, les membranes d'étanchéité à base de liant bitume/SBS soumises aux agents atmosphériques et climatiques présentent rapidement, en l'absence de couche de protection spécifique en surface, des microcraquelures (sous l'effet combiné des U.V., des variations de température et de l'humidité) qui nuisent à l'aspect esthétique, et à la pérennité des qualités d'étanchéité desdites membranes.

Pour remédier à cet inconvénient, les membranes d'étanchéité à base de liant bitume/SBS sont actuellement, de manière connue, recouvertes d'une couche de paillettes (minérales, organiques ou métalliques) ou d'un laminat métallique, qui sont intégrés au cours de la fabrication en surface desdites membranes. Des membranes à base de bitume modifié par des SBS, ne présentant pas une telle auto-protection doivent être actuellement nécessairement protégés des U.V. sur chantier par une protection rapportée (enrobé, végétalisation, gravillons ...).

Ces protections rapportées, dites auto-protections, génèrent un surpoids important (généralement de l'ordre de 1 kg/m²), produisent une fraction libre qui peut bloquer les moyens d'évacuation de l'eau de pluie et ne permettent pas de réaliser des jointoiements étanches par chevauchement partiel de membranes adjacentes (il faut retirer les paillettes le long des bords longitudinaux et au niveau de zones transversales d'extrémité desdites membranes).

Le problème posé à la présente invention consiste par conséquent à fournir une membrane d'étanchéité bitumineuse à base de liant bitume/élastomère, présentant notamment une bonne résistance aux U.V. sans auto-protection spécifique, une bonne ouvrabilité et une bonne tenue dans le temps, tant au point de vue étanchéité que de l'aspect visuel, ce tout en autorisant avantageusement une pose avec recouvrement latéral partiel et solidarisation par échauffement.

A cet effet, la présente invention concerne une membrane d'étanchéité destinée à être exposée directement au milieu extérieur et à ses agressions, cette membrane consistant essentiellement en une masse d'au moins une composition bitumineuse, conformée en au moins une couche continue, et en au moins une nappe de matériau filamenteux ou fibreux, noyée dans ladite masse, membrane caractérisée en ce que la composition bitumineuse au moins présente consiste en un mélange bitumineux essentiellement à base de bitume, de polymère élastomère SBS et de charge(s), préférentiellement minérale(s), en ce que ladite au moins une nappe consiste en un voile fin, à structure ajourée, sans direction préférentielle de résistance aux contraintes et formé de filaments et/ou de fibres en un matériau de préférence résistant aux U.V., ledit voile étant noyé dans la masse de composition(s) bitumeuse(s) en étant situé à proximité de la face destinée à être apparente ou exposée, après pose de ladite membrane et en ce que ladite membrane comporte une bande latérale, le long d'un de ses côtés longitudinaux, formant galon de recouvrement, ledit galon étant dépourvu de nappe ou voile.

La présence de ce voile ne doit cependant pas compromettre la bonne tenue des joints d'un lès à l'autre lors de l'application des membranes sur chantier. Le voile ainsi enrobé s'oppose à la formation et à la propagation en surface de fissures et craquelures de la masse d'enrobage sous-jacente tout en offrant un aspect esthétique.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue schématique partielle en coupe d'une membrane d'étanchéité selon un premier mode de réalisation de l'invention ;
la figure 2 est une vue schématique partielle en coupe d'une membrane d'étanchéité selon un second mode de réalisation de l'invention ;
la figure 3 est une vue schématique partielle en coupe d'une membrane d'étanchéité selon un troisième mode de réalisation de l'invention ;
la figure 4 est une vue en coupe d'une zone de jointoiement latéral entre deux membranes du type de celle représentée sur la figure 3 ;
la figure 5 est une vue similaire à la figure 4 concernant une variante de réalisation de la membrane de la figure 3, et,
la figure 6 est une vue partielle par transparence et de dessus de la couche de revêtement d'un système d'étanchéité, formée par des membranes d'étanchéité selon l'invention.

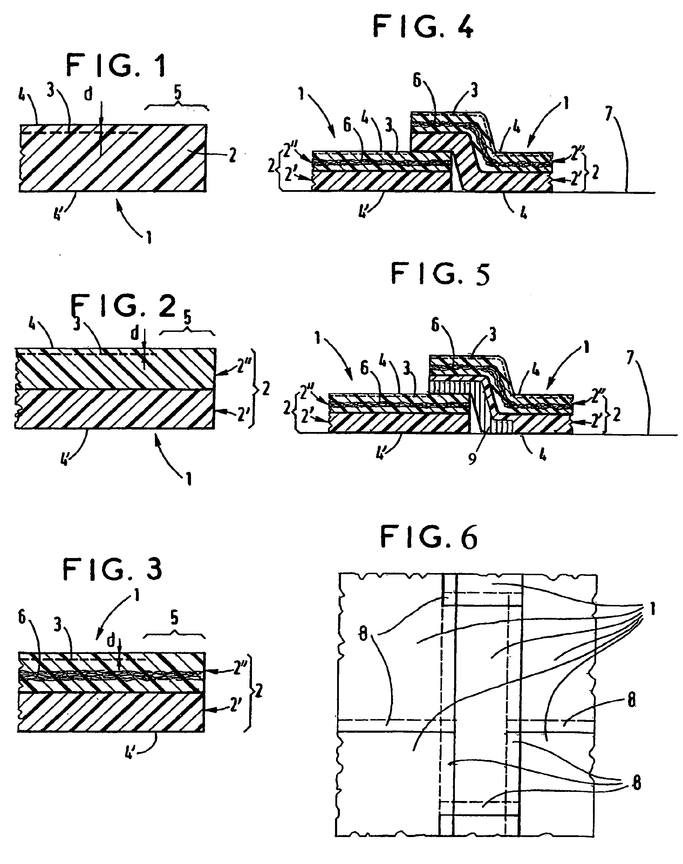

Les figures 1 à 3 des dessins annexés représentent de manière schématique et en coupe partielle, une membrane d'étanchéité 1 consistant essentiellement en une masse 2 d'au moins une composition bitumineuse, conformée en au moins une couche continue, et en au moins une nappe 3, 6 de matériau filamenteux ou fibreux, noyée dans ladite masse 2.

Conformément à l'invention, la composition bitumineuse au moins présente consiste en un mélange bitumineux essentiellement à base de bitume, de polymère élastomère SBS et de charge(s), préférentiellement minérale(s), et ladite au moins une nappe 3 consiste en un voile fin, à structure ajourée, sans direction préférentielle de résistance aux contraintes et formé de filaments et/ou de fibres en un matériau de préférence résistant aux U.V., ledit voile 3 étant noyé dans la masse 2 de composition(s) bitumeuse(s) en étant situé à proximité de la face 4 destinée à être apparente ou exposée, après pose de ladite membrane 1.

Le voile 3, en fournissant une cohésion structurelle et mécanique de la masse 2 de liant bitumineux à proximité de la surface de la face 4 de la membrane 1, ce même à très faible échelle, permet d'éviter la formation de microcraquelures en surface, sans nécessiter de couche protectrice supplémentaire et sans alourdir, ni rigidifier notablement la membrane 1 qui l'intègre, et sans augmenter sensiblement le coût de revient de cette dernière.

Egalement conformément à l'invention, et afin de permettre la formation d'une couche de revêtement continue et étanche sur la totalité de leur surface par association adjacente avec chevauchement partiel de plusieurs membranes 1, chaque membrane 1 comporte une bande latérale 5, le long d'un de ses côtés longitudinaux, formant galon de recouvrement, ledit galon 5 étant dépourvu de nappe ou voile 3. L'absence de voile 3 dans cette zone évite un gondolement de la membrane 1 à ce niveau (lors de l'opération de ramollissement par application de chaleur), la formation de contraintes dans cette zone et le décollement du voile 3 dans la zone réchauffée lors de la soudure de la membrane.

Comme le montre la figure 1 des dessins annexés, la masse 2 de liant bitumineux peut consister en totalité uniquement d'une composition sous forme de mélange bitume + polymère élastomère SBS + éventuel(le)s charges minérales et/ou additifs (anti-feu, anti-racines, ...).

En variante, et comme représenté sur les figures 2 et 3 des dessins annexés, la masse de compositions bitumineuses peut comprendre au moins deux compositions différentes réparties en au moins deux couches adjacentes 2', 2" stratifiées, à savoir au moins une première couche 2' formant la face 4' non apparente ou non exposée de la membrane 1 après pose et constituée par un mélange bitumineux à base de bitume, de polymère élastomère SBS et de charge(s) et au moins une seconde couche 2" formant la face 4 apparente et exposée de la membrane 1 après pose et constituée par un mélange bitumineux compatible avec celui de la première couche 2' et à base de bitume mélangé avec un polymère élastomère présentant une résistance augmentée, voire insensible, aux rayons U.V., et éventuellement avec une ou des charge(s), préférentiellement minérale(s).

Préférentiellement, la composition bitumineuse de ladite au moins une seconde couche 2" formant la face apparente et exposée 4 de la membrane 1 consiste essentiellement en du bitume mélangé avec un polymère élastomère SEBS et éventuellement avec une ou des charge(s), préférentiellement minérale(s).

L'homme du métier comprend bien entendu que les mélanges bitumineux précités comportent en plus des composants indiqués ci-dessus (bitume, SBS, SEBS) également des charges et des additifs usuellement intégrés dans ce type de compositions et bien connus de l'homme du métier. Les additifs peuvent éventuellement comprendre des substances anti-U.V., compatibilisantes ou encore améliorant la souplesse, la durabilité ou la résistance aux variations de température.

En accord avec la seconde variante de réalisation évoquée ci-dessus, il est avantageusement prévu que le voile fin 3 formant ladite au moins une nappe, par exemple du type à structure non tissée, grillagée, tissée ou analogue, est noyé dans ladite au moins une seconde couche 2", en étant disposée à proximité immédiate de la face apparente ou exposée 4 de la membrane 1.

Avantageusement, le plan médian dudit voile 3 est situé, dans les deux variantes précitées, à une distance d comprise entre 0,05 mm et 0,5 mm, préférentiellement entre 0,1 mm et 0,25 mm, de ladite face 4. Les filaments ou fibres constituant le voile 3 peuvent par exemple être réalisé(e)s en verre, en polypropylène, en polyamide, en polyester ou en des matières polymères ou minérales analogues.

Conformément à un mode de réalisation préféré de l'invention, représenté sur les figures 3, 4 et 5 des dessins annexés, la membrane 1 comporte une seconde nappe 6 de matériau filamenteux ou fibreux, également noyée dans la masse 2 de composition(s) bitumineuse(s) et formant une armature de renfort s'étendant, en largeur et en longueur, sur toute la surface de la membrane 1, le voile fin 3 formant première nappe étant disposé entre ladite seconde nappe 6 et la face apparente ou exposée 4 de la membrane 1 après pose (à l'exception du galon de recouvrement 5).

Dans le cadre du mode de réalisation préféré évoqué ci-dessus, il peut être prévu que la masse 2 de compositions bitumineuses comprenne deux mélanges bitumineux répartis en deux couches stratifiées 2' et 2", la seconde nappe 6 formant armature de renfort étant soit située et noyée dans la seconde couche 2" formant la face apparente ou exposée 4 de la membrane 1 après pose, soit située sensiblement à l'interface des deux couches 2' et 2" en étant imprégnée à la fois par la composition bitumineuse de la première couche 2' et par celle de la seconde couche 2".

En vue d'augmenter la cohérence structurelle de la membrane 1, et d'empêcher en particulier un délaminage de celle-ci, les deux nappes 3 et 6 peuvent être, au moins partiellement, reliées entre elles par des points de liaison chimique et/ou mécanique.

Comme le montre la figure 5 des dessins annexés, il peut également être prévu que la membrane 1 comporte, au niveau d'une zone en forme de bande ou de portion de bande latérale de sa face inférieure, une bande ou portion de bande 9 en un bitume ou une composition bitumineuse différent(e) du bitume ou de la composition bitumineuse formant la masse 2 bitumineuse de la membrane 1 ou la première couche 2' définissant la face 4 inférieure non apparente et non exposée de la membrane 1, ladite bande ou portion de bande 9 s'étendant préférentiellement le long du côté longitudinal de la membrane 1 opposé à celui comportant le galon 5 et étant disposé au niveau d'un dégagement en forme de bande ou de portion de bande de volume sensiblement complémentaire ménagé dans ladite masse 2 ou couche 2'.

Une telle bande 9 peut, par exemple, consister en une bande telle qu'évoquée dans le brevet US n° 6 740 356 et dans la demande de brevet européen n° 1 201 819, et être réalisée selon la technique opératoire décrite et représentée dans ces deux dépôts.

La bande 9 consiste avantageusement en une composition bitumineuse favorisant l'adhésion, l'étanchéité et/ou la flexibilité le long du côté concerné.

La présente invention a également pour objet, comme le montrent schématiquement les figures 4, 5 et 6 des dessins annexés, un système d'étanchéité rapporté sur un support exposé aux agents atmosphériques et climatiques, préférentiellement à surface sensiblement plane, en particulier élément de toiture ou de recouvrement analogue, système caractérisé en ce qu'il comprend une composante externe ou couche de revêtement exposée qui est formée par une ou plusieurs membranes 1 tel que décrit ci-dessus, les membranes 1 éventuellement présentes (en cas de pluralité de membranes) se chevauchant partiellement au niveau de leurs côtés longitudinaux et/ou au niveau de leurs extrémités longitudinales, avec formation de zones de liaison étanches 8.

Eventuellement, la face apparente ou exposée 4 de la ou des membrane(s) d'étanchéité 1 formant la couche de revêtement est recouverte d'un film d'un matériau décoratif, et, le cas échéant, protecteur, tel que par exemple de la peinture.

Enfin, l'invention concerne aussi un procédé de fabrication d'une membrane 1 tel que décrit ci-dessus, caractérisé en ce qu'il consiste à imprégner une bande d'une nappe de matériau filamenteux ou fibreux 6 avec une masse 2, 2" d'un mélange bitumineux à l'état liquide, intégrant essentiellement du bitume, un polymère élastomère SBS ou SEBS et au moins une charge, en tirant ladite bande à travers une installation d'imprégnation, à mettre en place une bande de voile fin 3 en surface de la masse du mélange bitumineux 2, 2" imprégnant et enrobant la bande de nappe 6 lorsque cette masse de liant est encore à l'état visqueux, de telle manière que ledit voile 3 soit noyé dans ladite masse de mélange bitumineux 2, 2" en étant situé à proximité de la face apparente ou exposée de la membrane 1 résultante, ledit voile 3 ayant une largeur inférieure à celle de la nappe 6 pour constituer une bande latérale 5 le long d'un côté longitudinal, formant galon de recouvrement dépourvu de voile 3, à rapporter éventuellement une couche supplémentaire 2' d'un mélange bitumineux [bitume/polymère élastomère SBS/charge(s) minérale(s) éventuelle(s)] sur la face opposée à la face apparente ou exposée 4 de la membrane 1, et, enfin, à conditionner ladite membrane 1 en rouleaux après refroidissement et découpage en longueur et en largeur.

Lorsqu'une bande 9 en une composition bitumineuse différente est prévue, le procédé précité sera complété ou modifié pour intégrer les étapes opératoires nécessaire pour former cette bande 9, telles que décrites et représentées dans les dépôts de brevets américain et européen précités.

On décrira à présent, sous forme d'exemples non limitatifs, plusieurs réalisations concrètes de membranes en accord avec l'invention.

Exemple 1 : Membrane d'étanchéité de 2,5 mm d'épaisseur et de 1000 mm de laize avec armature en voile de verre 50 g/m². Le liant est un mélange de bitume 160/220 modifié par 12,5 % de SBS radial de type KRATON TR 1186 (pourcentage de SBS sur la base du mélane bitume + SBS), ce mélange étant chargé à hauteur de 30 %. Dans ce liant est noyé un voile de viscose de 35 g/m² de 920 mm de laize de façon à avoir un galon soudable de 80 mm. La sous face est protégée par un film PE de 10 µm d'épaisseur.

Exemple 2 : Membrane d'étanchéité monocouche de 4,0 mm d'épaisseur et de 1000 mm de laize avec armature en polyester non tissé de 180 g/m². Le liant est un mélange de bitume 160/220 modifié par 12,5 % d'un mélange 50/50 SBS radial de type KRATON TR 1186 et SEBS de type KRATON G 1650. Dans ce liant est noyé un voile de polyester de 25 g/m² de 920 mm de laize de façon à avoir un galon soudable de 80 mm. La sous face est protégée par un film PE de 10 µm d'épaisseur.

Exemple 3 : Membrane d'étanchéité monocouche de 4,0 mm d'épaisseur et de 1000 mm de laize avec armature composite de 250 g/m². Le liant de surface est un mélange de bitume 160/220 modifié par 12,5 % d'un mélange 50/50 SBS radial de type KRATON TR 1186 et SEBS de type KRATON G 1650. Dans ce liant est noyé un voile de verre de 50 g/m² de 920 mm de laize de façon à avoir un galon soudable de 80 mm. Le liant de sous face est un mélange de bitume 160/220 modifié par 12,5 % de SBS radial de type KRATON TR 1186. La sous face est protégée par un film PE de 10 µm d'épaisseur.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Membrane d'étanchéité destinée à être exposée directement au milieu extérieur et à ses agressions, cette membrane consistant essentiellement en une masse d'au moins une composition bitumineuse, conformée en au moins une couche continue, et en au moins une nappe de matériau filamenteux ou fibreux, noyée dans ladite masse, membrane **caractérisée en ce que** la composition bitumineuse au moins présente consiste en un mélange bitumineux essentiellement à base de bitume, de polymère élastomère SBS et de charge(s), préférentiellement minérales, **en ce que** ladite au moins une nappe (3) consiste en un voile fin, à structure ajourée, sans direction préférentielle de résistance aux contraintes et formé de filaments et/ou de fibres en un matériau de préférence résistant aux U.V., ledit voile (3) étant noyé dans la masse (2) de composition(s) bitumeuse(s) en étant situé à proximité de la face (4) destinée à être apparente ou exposée, après pose de ladite membrane (1) et **en ce que** ladite membrane (1) comporte une bande latérale (5), le long d'un de ses côtés longitudinaux, formant galon de recouvrement, ledit galon (5) étant dépourvu de nappe ou voile (3).

2. Membrane d'étanchéité selon la revendication 1, **caractérisée en ce que** la masse de compositions bitumineuses (2) comprend au moins deux compositions différentes réparties en au moins deux couches adjacentes (2', 2") stratifiées, à savoir au moins une première couche (2') formant la face (4') non apparente ou non exposée de la membrane (1) après pose et constituée par un mélange bitumineux à base de bitume, de polymère élastomère SBS et de charge(s) et au moins une seconde couche (2") formant la face (4) apparente et exposée de la membrane (1) après pose et constituée par un mélange bitumineux compatible avec celui de la première couche (2') et à base de bitume mélangé avec un polymère élastomère présentant une résistance augmentée, voire insensible, aux rayons U.V., et éventuellement avec une ou des charge(s), préférentiellement minérale(s).

3. Membrane d'étanchéité selon la revendication 2, **caractérisée en ce que** la composition bitumineuse de ladite au moins une seconde couche (2") formant la face apparente et exposée (4) de la membrane (1) consiste essentiellement en du bitume mélangé avec un polymère élastomère SEBS.

4. Membrane selon l'une quelconque des revendications 2 et 3, **caractérisée en ce que** le voile fin (3) formant ladite au moins une nappe, par exemple du type à structure non tissée, grillagée, tissée ou analogue, est noyé dans ladite au moins une seconde couche (2"), en étant disposée à proximité immédiate de la face apparente ou exposée (4) de la membrane (1), le plan médian dudit voile (3) étant situé à une distance (d) comprise entre 0,05 mm et 0,5 mm, préférentiellement entre 0,1 mm et 0,25 mm, de ladite face.

5. Membrane selon l'une quelconque des revendications 1 à 4, **caractérisée en ce qu'**elle comporte une seconde nappe (6) de matériau filamenteux ou fibreux, également noyée dans la masse (2) de composition(s) bitumineuse(s) et formant une armature de renfort s'étendant, en largeur et en longueur, sur toute la surface de la membrane (1), le voile fin (3) formant première nappe étant disposé entre ladite seconde nappe (6) et la face apparente ou exposée (4) de la membrane (1) après pose.

6. Membrane selon la revendication 5, pour autant qu'elle se rattache à l'une quelconque des revendications 2 à 4, **caractérisée en ce que** la masse (2) de compositions bitumineuses comprend deux mélanges bitumineux répartis en deux couches stratifiées (2' et 2"), la seconde nappe (6) formant armature de renfort étant soit située et noyée dans la seconde couche (2") formant la face apparente ou exposée (4) de la membrane (1) après pose, soit située sensiblement à l'interface des deux couches (2' et 2") en étant imprégnée à la fois par la composition bitumineuse de la première couche (2') et par celle de la seconde couche (2").

7. Membrane selon la revendication 5 ou 6, **caractérisée en ce que** les deux nappes (3 et 6) sont, au moins partiellement, reliées entre elles par des points de liaison chimique et/ou mécanique.

8. Membrane selon l'une quelconque des revendications 1 à 7, **caractérisée en ce qu'**elle comporte, au niveau d'une zone en forme de bande ou de portion de bande latérale de sa face inférieure, une bande ou portion de bande (9) en un bitume ou une composition bitumineuse différent(e) du bitume ou de la composition bitumineuse formant la masse (2) bitumineuse de la membrane (1) ou la première couche (2') définissant la face (4) inférieure non apparente et non exposée de la membrane (1), ladite bande ou portion de bande (9) s'étendant préférentiellement le long du côté longitudinal de la membrane (1) opposé à celui comportant le galon (5) et étant disposé au niveau d'un dégagement en forme de bande ou de portion de bande de volume sensiblement complémentaire ménagé dans ladite masse (2) ou couche (2').

9. Système d'étanchéité rapporté sur un support exposé aux agents atmosphériques et climatiques, préférentiellement à surface sensiblement plane, en particulier élément de toiture ou de recouvrement analogue, système **caractérisé en ce qu'**il comprend une composante externe ou couche de revêtement exposée qui est formée par une ou plusieurs membranes (1) selon l'une quelconque des revendications 1 à 8, les membranes (1) éventuellement présentes se chevauchant partiellement au niveau de leurs côtés longitudinaux et/ou au niveau de leurs extrémités longitudinales, avec formation de zones de liaison étanches (8).

10. Système selon la revendication 9, **caractérisé en ce que** la face apparente ou exposée (4) de la ou des membrane(s) d'étanchéité (1) formant la couche de revêtement est recouverte d'un film d'un matériau décoratif, et, le cas échéant, protecteur, tel que par exemple de la peinture.

11. Procédé de fabrication d'une membrane selon l'une quelconque des revendications 3 à 7, **caractérisé en ce qu'**il consiste à imprégner une bande d'une nappe de matériau filamenteux ou fibreux (6) avec une masse (2, 2") d'un mélange bitumineux à l'état liquide, intégrant essentiellement du bitume, un polymère élastomère SBS ou SEBS et au moins une change, en tirant ladite bande à travers une installation d'imprégnation, à mettre en place une bande de voile fin (3) en surface de la masse du mélange bitumineux (2, 2") imprégnant et enrobant la bande de nappe (6) lorsque cette masse de liant est encore à l'état visqueux, de telle manière que ledit voile (3) soit noyé dans ladite masse de mélange bitumineux (2, 2") en étant situé à proximité de la face apparente ou exposée de la membrane (1) résultante, ledit voile (3) ayant une largeur inférieure à celle de la nappe (6) pour constituer une bande latérale (5) le long d'un côté longitudinal, formant galon de recouvrement dépourvu de voile (3), à rapporter éventuellement une couche supplémentaire (2') d'un mélange bitumineux [bitume/polymère élastomère SBS/charge(s) minérale(s) éventuelle(s)] sur la face opposée à la face apparente ou exposée (4) de la membrane (1), et, enfin, à conditionner ladite membrane (1) en rouleaux après refroidissement et découpage en longueur et en largeur.

## Claims

1. A sealing membrane intended to be directly exposed to the external environment and its stresses, said membrane consisting essentially of a mass of at least one bituminous composition formed into at least one continuous layer, and at least one layer of filament or fibrous material embedded into said mass, the membrane being **characterised in that** at least the present bituminous composition consists of a bituminous mixture essentially including a base of bitumen, SBS elastomer polymer and preferably mineral filler(s), **in that** the said at least one layer (3) consists of a fine web with an open-work structure, with no preferred direction of stress resistance and formed by filaments and/or fibres made from a material that is preferably resistant to UV, said web (3) being embedded into the mass (2) of bituminous composition(s) by being placed close to the face (4) intended to be visible or exposed after laying the said membrane (1), and **in that** the said membrane (1) comprises a lateral band (5), along one of its longitudinal sides forming an overlap edging, said edging (5) having no ply or web (3).

2. The sealing membrane according to claim 1, **characterised in that** the mass of bituminous compositions (2) comprises at least two different compositions distributed into at least two adjacent, stratified layers (2', 2"), namely at least one first layer (2') forming the non-visible or non-exposed face (4') of the membrane (1) after laying and consisting of a bituminous mixture that includes bitumen, SBS elastomer polymer and filler(s), and at least one second layer (2") forming the visible and exposed face (4) of the membrane (1) after laying and consisting of a bituminous mixture that is compatible with the bituminous mixture of the first layer (2') and includes bitumen mixed with an elastomer polymer having increased resistance or insensitivity to UV rays, and possibly with one or more fillers, preferably mineral fillers.

3. The sealing membrane according to claim 2, **characterised in that** the bituminous composition of the said at least one second layer (2") forming the visible and exposed face (4) of the membrane (1) consists essentially of bitumen mixed with an SEBS elastomer polymer.

4. The membrane according to any one of claims 2 and 3, **characterised in that** the fine web (3) forming the said at least one layer, for example of the type with a non-woven structure, a wired structure, a woven or similar structure, is embedded into said at least one second layer (2"), by being arranged in the immediate proximity of the visible or exposed face (4) of the membrane (1), whereby the mid-plane of said web (3) is situated at a distance (d) of between 0.05 mm and 0.5 mm, preferably between 0.1 mm and 0.25 mm from the said face.

5. The membrane according to any one of claims 1 to 4, **characterised in that** it comprises a second layer (6) of filament or fibrous material that is also embedded into the mass (2) of bituminous composition(s) and forms a reinforcement armature that extends, widthways and lengthways, over the entire surface of the membrane (1), whereby the fine web (3) forming the first layer is arranged between said second layer (6) and the visible or exposed face (4) of the membrane (1) after laying.

6. The membrane according to claim 5, insofar as it relates to any one of claims 2 to 4, **characterised in that** the mass (2) of bituminous compositions comprises two bituminous mixtures distributed in two stratified layers (2' and 2"), the second layer (6) that forms the reinforcement armature being either located and embedded in the second layer (2") that forms the visible or exposed face (4) of the membrane (1) after laying, or situated substantially at the interface of the two layers (2' and 2") being impregnated at the same time by the bituminous composition of the first layer (2') and by that of the second layer (2").

7. The membrane according to claim 5 or 6, **characterised in that** the two layers (3 and 6) are, at least partially, connected by chemical and/or mechanical connecting points.

8. The membrane according to any one of claims 1 to 7, **characterised in that** it comprises, in the region of a zone in the form of a band or lateral band portion of its lower face, a band or band portion (9) made of bitumen or a bituminous composition that differs from the bitumen or bituminous composition forming the bituminous mass (2) of the membrane (1) or the first layer (2') defining the lower non-visible and non-exposed face (4) of the membrane (1), said band or band portion (9) extending preferably along the longitudinal side of the membrane (1), that is opposite the one comprising the edging (5), and being arranged in the region of a clearance in the form of a band or band portion of substantially complementary volume arranged in said mass (2) or layer (2').

9. A sealing system applied onto a support exposed to atmospheric and climatic agents, preferably with a virtually plane surface, in particular a roofing element or similar covering, the system being **characterised in that** it comprises an external component or exposed covering layer formed by one or more membranes (1) according to any one of claims 1 to 8, the possibly present membranes (1) overlapping partly in a region of their longitudinal edges and/or in the region of their longitudinal ends, with the formation of sealed connecting zones (8).

10. The system according to claim 9, **characterised in that** the visible or exposed face (4) of the sealing membrane(s) (1) forming the covering layer is covered with a film of decorative material and, if necessary, protective material, such as for example paint.

11. A method for manufacturing a membrane according to any one of claims 3 to 7, **characterised in that** it consists of impregnating a band of a layer of filament material or fibrous material (6) with a mass (2, 2") of a bituminous mixture in a liquid state, incorporating essentially bitumen, an SBS or SEBS elastomer polymer and at least one filler, by drawing said band through an impregnation installation, putting in place a band of fine web (3) on a surface of the mass of bituminous mixture (2, 2") impregnating and coating the band of layer (6) while this mass of bonding material is still in a viscous state, in such a way that said web (3) is embedded into said mass of bituminous mixture (2, 2") while being situated next to the visible or exposed face of the resulting membrane (1), said web (3) being narrower than the layer (6) to form a lateral band (5) along a longitudinal side, forming an overlap edging with no web (3), possibly applying an additional layer (2') of bituminous mixture [SBS elastomer polymer/bitumen/ mineral fillers] onto the face opposite the visible or exposed face (4) of the membrane (1) and finally conditioning said membrane (1) by rolling after cooling and cutting lengthways and widthways.

## Patentansprüche

1. Dichtungsmembran, die dazu geeignet ist, direkt dem Außenmilieu und seinen Angriffen ausgesetzt zu werden, wobei diese Membran im Wesentlichen aus einer Masse von mindestens einer bitumenhaltigen Zusammensetzung, die in mindestens eine ununterbrochene Schicht ausgebildet ist, und aus mindestens einer Matte aus fadenförmigem oder faserigem Material besteht, die in die Masse eingelassen ist, wobei die Membran **dadurch gekennzeichnet ist, dass** die mindestens eine bitumenhaltige Zusammensetzung aus einem bitumenhaltigen Gemisch im Wesentlichen auf der Basis von Bitumen, Elastomerpolymer SBS und Füllstoff oder Füllstoffen, die vorzugsweise mineralisch sind, besteht, und dass die mindestens eine Matte (3) aus einem feinen Flor mit durchbrochener Struktur, ohne bevorzugte Festigkeitsrichtung gegenüber Belastungen und aus Fäden und/oder Fasern aus einem Material besteht, das vorzugsweise UVbeständig ist, wobei der Flor (3) in der Masse (2) aus bitumenhaltiger Zusammensetzung/Zusammensetzungen eingelassen ist und sich in der Nähe der Seite (4) befindet, die dazu bestimmt ist, sichtbar oder exponiert zu sein, nachdem die Membran (1) verlegt wurde, und dass die Membran (1) ein Seitenband (5) entlang einer ihrer Längsseiten aufweist, das eine Abdeckborte bildet, wobei die Borte (5) keine Matte oder keinen Flor (3) aufweist.

2. Dichtungsmembran nach Anspruch 1, **dadurch gekennzeichnet, dass** die Masse aus bitumenhaltigen Zusammensetzungen (2) mindestens zwei unterschiedliche Zusammensetzungen aufweist, die auf mindestens zwei geschichtete benachbarte Schichten (2', 2") aufgerteilt sind, nämlich eine erste Schicht (2'), die nach dem Verlegen die nicht sichtbare oder nicht exponierte Seite (4') der Membran (1) bildet und aus mindestens einem bitumenhaltigen Gemisch auf der Basis von Bitumen, Elastomerpolymer SBS und Füllstoff oder Füllstoffen besteht, und mindestens eine zweite Schicht (2"), die die sichtbare und exponierte Seite (4) der Membran (1) nach dem Verlegen bildet und aus einem bitumenhaltigen Gemisch besteht, das mit dem der ersten Schicht (2') kompatibel ist, und auf Basis von Bitumen mit einem Elastomerpolymer, der eine erhöhte Beständigkeit, ja sogar Unempfindlichkeit gegenüber UV-Strahlen aufweist, und eventuell mit einem oder mehreren Füllstoffen gemischt ist, die vorzugsweise mineralisch sind.

3. Dichtungsmembran nach Anspruch 2, **dadurch gekennzeichnet, dass** die bitumenhaltige Zusammensetzung der mindestens einen zweiten Schicht (2"), die die sichtbare und exponierte Seite (4) der Membran (1) bildet, im Wesentlichen aus Bitumen gemischt mit einem Elastomerpolymer SEBS besteht.

4. Membran nach einem der Ansprüche 2 und 3, **dadurch gekennzeichnet, dass** der feine Flor (3), der die mindestens eine Matte bildet, zum Beispiel des Typs mit Vlies-, Gitter-, Webstruktur oder ähnlicher Struktur, in die mindestens eine zweite Schicht (2") eingelassen und in der unmittelbaren Nähe der sichtbaren oder exponierten Seite (4) der Membran (1) angeordnet ist, wobei die Mittenebene des Flors (3) in einer Entfernung (d) zwischen 0,05 mm und 0,5 mm, vorzugsweise zwischen 0,1 mm und 0,25 mm von der Seite entfernt liegt.

5. Membran nach einem der vorhergehenden Ansprüche 1 bis 4, **dadurch gekennzeichnet, dass** sie eine zweite Matte (6) aus fadenförmigem oder faserigem Material aufweist, die ebenfalls in die Masse (2) aus bitumenhaltiger Zusammensetzung oder bitumenhaltigen Zusammensetzungen eingelassen ist und eine Verstärkungsbewehrung bildet, die sich in die Breite und in die Länge auf der ganzen Oberfläche der Membran (1) erstreckt, wobei der feine Flor (3) eine erste Matte bildet, die nach dem Verlegen zwischen der zweiten Matte (6) und der sichtbaren oder exponierten Seite (4) der Membran (1) angeordnet ist.

6. Membran nach Anspruch 5, sofern sie auf einen der Ansprüche 2 bis 4 rückbezogen ist, **dadurch gekennzeichnet, dass** die Masse (2) aus bitumenhaltigen Zusammensetzungen zwei bitumenhaltige Gemische enthält, die auf zwei geschichteten Schichten (2' und 2") augeteilt sind, wobei die zweite Matte (6), die die Verstärkungsbewehrung bildet, in der zweiten Schicht (2"), die nach dem Verlegen die sichtbare oder exponierte Seite (4) der Membran (1) bildet, liegt und eingelassen ist, oder im Wesentlichen an der Schnittstelle der zwei Schichten (2' und 2") und dabei sowohl von der bitumenhaltigen Zusammensetzung der ersten Schicht (2') als auch von der zweiten Schicht (2") imprägniert ist.

7. Membran nach Anspruch 5 oder 6, **dadurch gekennzeichnet, dass** die beiden Matten (3 und 6) zumindest teilweise miteinander durch chemische und/oder mechanische Verbindungspunkte verbunden sind.

8. Membran nach einem der Ansprüche 1 bis 7, **dadurch gekennzeichnet, dass** sie im Bereich einer Zone in Form eines Bandes oder eines Seitenbandabschnitts ihrer Unterseite ein Band oder einen Bandabschnitt (9) aus einem Bitumen oder einer bitumenhaltigen Zusammensetzung aufweist, die von dem Bitumen oder der bitumenhaltigen Zusammensetzung, die die bitumenhaltige Masse (2) der Membran (1) oder der ersten Schicht (2'), die die nicht sichtbare und nicht exponierte Unterseite (4) der Membran (1) definiert, unterschiedlich ist, wobei sich das Band oder der Bandabschnitt (9) vorzugsweise entlang der Längsseite der Membran (1) erstreckt, die derjenigen gegenüber liegt, die die Borte (5) aufweist, und wobei das Band oder der Bandabschnitt (9) im Bereich einer bandförmigen oder bandabschnittförmigen Aussparung mit im Wesentlichen komplementärem Volumen angeordnet ist, die in der Masse (2) oder der Schicht (2') eingerichtet ist.

9. Dichtungssystem, das an einen Träger angefügt wird, der Atmosphärilien und Klimaeinflüssen ausgesetzt ist, vorzugsweise mit im Wesentlichen ebener Fläche, insbesondere ein Dachelement oder eine ähnliche Abdeckung, **dadurch gekennzeichnet, dass** es eine exponierte äußere Komponente oder Beschichtungsschicht aufweist, die aus einer oder mehreren Membranen (1) nach einem der Ansprüche 1 bis 8 gebildet ist, wobei sich die eventuell vorhandenen Membranen (1) teilweise im Bereich ihrer Längsseiten und/oder im Bereich ihrer Längsenden unter Bildung dichter Verbindungszonen (8) gegenseitig überlagern.

10. System nach Anspruch 9, **dadurch gekennzeichnet, dass** die sichtbare oder exponierte Seite (4) der einen oder mehreren Dichtungsmembranen (1), die die Beschichtungsschicht bilden, mit einer Folie aus einem Dekormaterial und gegebenenfalls aus einem schützenden Material, wie zum Beispiel ein Anstrich, beschichtet ist.

11. Verfahren zum Herstellen einer Membran nach einem der Ansprüche 3 bis 7, **dadurch gekennzeichnet, dass** es darin besteht, ein Band einer Matte aus fadenförmigem oder faserigem Material (6) mit einer Masse (2, 2") aus einem bitumenhaltigen Gemisch im flüssigen Zustand, das im Wesentlichen Bitumen, einen Elastomerpolymer SBS oder SEBS und mindestens einen Füllstoff enthält, zu imprägnieren, indem das Band durch eine Imprägnieranlage gezogen wird, ein Band aus feinem Flor (3) auf der Oberfläche der Masse des bitumenhaltigen Gemischs (2, 2"), das das Mattenband (6) imprägniert und umhüllt, anzubringen, wenn diese Bindemittelmasse noch im viskösen Zustand ist, so dass der Flor (3) in der Masse aus bitumenhaltigem Gemisch (2, 2") eingelassen ist und sich in der Nähe der sichtbaren oder exponierten Seite der resultierenden Membran (1) befindet, wobei der Flor (3) eine Breite hat, die kleiner ist als die der Matte (6), um ein Seitenband (5) entlang einer Längsseite zu bilden, das eine Abdeckborte ohne Flor (3) bildet, eventuell eine zusätzliche Schicht (2') aus einem bitumenhaltigen Gemisch [Bitumen/Elastomerpolymer SBS/eventuell ein oder mehrere mineralische Füllstoffe] auf der der sichtbaren oder exponierten Seite (4) der Membran (1) entgegengesetzten Seite anzufügen, und die Membran (1) schließlich nach dem Auskühlen und Zuschneiden in Länge und Breite in Rollen zu verpacken.
